# EUROPÄISCHE PATENTSCHRIFT

(11) **EP 3 327 671 B1**
(45) Veröffentlichungstag und Bekanntmachung des Hinweises auf die Patenterteilung: **22.05.2019**
(21) Anmeldenummer: 17197982.6
(22) Anmeldetag: 24.10.2017
(51) Int. Cl.: G06T 7/593, G06T 7/269

(54) **VERFAHREN UND VORRICHTUNG ZUR ERMITTLUNG EINER ZUORDNUNG ZWISCHEN EINEM MATRIXELEMENT EINER MATRIX UND EINEM VERGLEICHSMATRIXELEMENT EINER VERGLEICHSMATRIX MITTELS LESEN AUS MEHREREN KORRESPONDENZTABELLEN**
METHOD AND DEVICE FOR DETERMINING AN ASSOCIATION BETWEEN A MATRIX ELEMENT OF A MATRIX AND A COMPARISON MATRIX ELEMENT OF A COMPARISON MATRIX BY READING FROM MULTIPLE CORRESPONDENCE TABLES
PROCÉDÉ ET DISPOSITIF DE DÉTERMINATION D'UNE AFFECTATION ENTRE UN ÉLÉMENT DE MATRICE D'UNE MATRICE ET UN ÉLÉMENT DE MATRICE DE COMPARAISON D'UNE MATRICE DE COMPARAISON AU MOYEN DE LA LECTURE À PARTIR DES PLUSIEURS TABLEAUX DE CORRESPONDANCE

(30) Priorität: 23.11.2016 DE 102016223071
(43) Veröffentlichungstag der Anmeldung: 30.05.2018
(73) Patentinhaber: Robert Bosch GmbH, 70442 Stuttgart (DE)
(72) Erfinder: Simon, Stephan, 31079 Sibbesse (DE)

(56) Entgegenhaltungen:
- WO-A2-2005/048195
- STEIN F: "Efficient Computation of Optical Flow Using the Census Transform", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, Bd. 3175, 1. August 2004 (2004-08-01), Seiten 79-86, XP002334021, ISBN: 978-3-540-24128-7
- NELSON YEN-CHUNG CHANG ET AL: "Algorithm and Architecture of Disparity Estimation With Mini-Census Adaptive Support Weight", IEEE TRANSACTIONS ON CIRCUITS AND SYSTEMS FOR VIDEO TECHNOLOGY, INSTITUTE OF ELECTRICAL AND ELECTRONICS ENGINEERS, USA, Bd. 20, Nr. 6, 1. Juni 2010 (2010-06-01), Seiten 792-805, XP011304975, ISSN: 1051-8215
- ROSTAM AFFENDI HAMZAH ET AL: "Literature Survey on Stereo Vision Disparity Map Algorithms", JOURNAL OF SENSORS, Bd. 2016, 1. Januar 2016 (2016-01-01), Seiten 1-23, XP055409626, US ISSN: 1687-725X, DOI: 10.1155/2016/8742920

## Beschreibung

### Stand der Technik

Die vorliegende Erfindung betrifft ein Verfahren und eine Vorrichtung zur Ermittlung einer Zuordnung zwischen einem Matrixelement einer Matrix und einem Vergleichsmatrixelement einer Vergleichsmatrix mittels mehrerer Korrespondenztabellen.

Insbesondere werden bei kamerabasierten Systemen Vergleiche von Elementen von zwei Matrizen durchgeführt und Zuordnungen zwischen den Elementen erstellt. Beispielsweise können die Matrix und die Vergleichsmatrix jeweils ein erstes und zweites Bild repräsentieren. Die Bildung von Zuordnung oder Korrespondenzen werden im Bereich der Computervision, insbesondere beim optischen Fluss oder bei der Stereo-Disparität eingesetzt. Beim optischen Fluss werden Korrespondenzen in zeitlicher Richtung gebildet, um zu ermitteln, wie sich die Projektion eines Punktes in einer 3D-Szene in ein 2D-Bild von einer alten Koordinate zu einer neuen Koordinate weiterbewegt hat. Dabei kann die Bewegung im Bild durch die Bewegung des Szenenpunktes oder durch die Bewegung einer Kamera hervorgerufen werden oder durch beides gleichzeitig.

Bei der Stereo-Vision werden verschiedene Bilder und Korrespondenzen zwischen einzelnen Bildpunkten verwendet, um zeitgleiche Bilder von zwei Kameras zu erfassen, die an unterschiedlichen Orten angeordnet sind. Die relative Anordnung der Kameras ist in der Regel bekannt und fest. Durch Korrespondenzbildung lässt sich so eine Entfernung zu einem Punkt in der 3D-Szene ermitteln.

Aus der DE 11 2009 001 727 B4, der DE 10 2014 009 522 A1 und der DE 10 2013 224 502 A1 sind Verfahren zur Bildverarbeitung und zur Berechnung des optischen Flusses bekannt, wobei eine Korrespondenz von Bildpunkten in unterschiedlichen Bildern erzeugt werden. Während die beiden ersten Druckschriften auf einen optischen Fluss gerichtet sind, befasst sich die letztgenannte Druckschrift mit Bildern einer Stereokamera.

Dokument WO 2005/048195 A2 offenbart ein verfahren zur Verarbeitung von Bilddaten bewegter Szenarien mittels einer Signaturtabellle. Die Signaturtabellle weist für jedes Pixel eines Bildes berechnete Signaturstrings und jeweilige Pixelkoordinaten des Pixels auf.

### Offenbarung der Erfindung

Das erfindungsgemäße Verfahren zur Ermittlung einer Zuordnung zwischen einem Matrixelement einer Matrix und einem Vergleichsmatrixelement einer Vergleichsmatrix, bei dem die Matrix in eine Mehrzahl von Submatrizen aufgeteilt ist, wobei jeder Submatrix eine Korrespondenztabelle zugeordnet ist, sieht einen Schreibprozess zum Schreiben der Position eines Matrixelements einer Submatrix in ein Tabellenfeld der zugeordneten Korrespondenztabelle vor. Der Schreibprozess umfasst die Schritte des Auslesens eines Merkmals eines Matrixelements einer Submatrix der Matrix, das Ermitteln eines Zugriffsmerkmals aus dem Merkmal des Matrixelements und das Ermitteln eines Tabellenfelds der zugehörigen Korrespondenztabelle aus dem Zugriffsmerkmal. In einem weiteren Schritt wird die Position des Matrixelements der Submatrix der Matrix in das ermittelte Tabellenfeld der zugehörigen Korrespondenztabelle geschrieben. In einem Leseprozess wird für ein Vergleichsmatrixelement der Vergleichsmatrix ein Merkmal ausgelesen, aus dem ein Zugriffsmerkmal ermittelt wird. Mittels des Zugriffsmerkmals wird ein Tabellenfeld der Korrespondenztabellen ermittelt. Aus dem ermittelten Tabellenfeld der Korrespondenztabellen werden die jeweiligen hinterlegten Positionen eines Matrixelements ausgelesen. In einem weiteren Schritt erfolgt eine Zuordnung pro Korrespondenztabelle zwischen der ausgelesenen Position eines Matrixelements und der aktuellen Position des Vergleichsmatrixelements der Vergleichsmatrix.

Auf diese Weise ist es möglich, Zuordnungen zwischen einem Vergleichsmatrixelement einer Vergleichsmatrix und einem Matrixelement einer Matrix mittels mehrerer Korrespondenztabellen herzustellen. Dabei kann der Schreibprozess in mehrere Prozesse aufgeteilt werden. Beispielsweise kann ein einzelner Schreibprozess die Matrixelemente einer Submatrix der Matrix in die zugeordnete Korrespondenztabelle schreiben. Auf diese Weise lässt sich eine Parallelisierung der Schreibprozesse ermöglichen. Durch die Aufteilung der Matrix in Submatrizen wird insgesamt der Speicherbedarf für die Speicherung der Position der Matrixelemente reduziert, da die Position lediglich in den Submatrizen und den zugehörigen Korrespondenztabellen eindeutig sein muss. Das Verfahren ermöglicht eine schnelle Abarbeitung und im Bereich der Bildverarbeitung eine so schnelle Verarbeitung von FullHD-Bildern, dass eine Quasi-Echtzeitanalyse von Bildern möglich ist.

Die Unteransprüche zeigen bevorzugte Weiterbildungen der Erfindung.

Es ist vorteilhaft, wenn ein Versatz zwischen dem Schreibprozess bzw. den Schreibprozessen und dem Leseprozess besteht und der Versatz fest oder variabel ist. Der Versatz kann als zeitliche oder örtliche Verzögerung angesehen werden. Die Wahl des Versatzes hängt beispielsweise bei zeilenweisem Durchlaufen der Matrix insbesondere von der größten Zeilendifferenz ab, für die eine Zuordnung oder Korrespondenz mittels des erfindungsgemäßen Verfahrens noch auffindbar sein soll.

Ebenfalls vorteilhaft ist es, wenn der Versatz so gewählt ist, dass der Leseprozess dem Schreibprozess folgt. So wird sichergestellt, dass bereits wenigstens einige Tabellenfelder der Korrespondenztabellen mit Positionen von Matrixelementen gefüllt sind. Vorteilhafterweise ist der Versatz so gewählt, dass die Wahrscheinlichkeit des vorzeitigen Verlustes von möglichen Korrespondenzen durch Überschreiben von Positionen in den Tabellenfeldern der Korrespondenztabelle gering ist. Unter einem vorzeitigen Verlust ist dabei zu verstehen, dass die Position im Tabellenfeld überschrieben wird, bevor sie zum Auffinden der gesuchten Korrespondenz bzw. Zuordnung verwendet werden kann. Deshalb ist es vorteilhaft, den Versatz nicht zu groß zu wählen. Er sollte nur so groß wie nötig gewählt werden.

Es ist vorteilhaft, wenn der Leseprozess mehrere Korrespondenztabellen, eine bestimmte Gruppe von Korrespondenztabellen oder alle Korrespondenztabellen erfasst. Beispielsweise lassen sich nur wenige Korrespondenztabellen auslesen, wenn nur in diesen ein ausgefülltes Tabellenfeld zu erwarten ist. Insbesondere im Zusammenspiel mit einem Suchbereich oder Suchfeld in der Matrix können nur die Korrespondenztabellen ausgelesen werden, deren zugehörige Submatrizen in dem Suchbereich liegen bzw. von dem Suchbereich wenigstens teilweise erfasst werden. Der Leseprozess wird hierdurch beschleunigt. Vorteilhafterweise erfolgt eine Zuweisung zwischen einem Matrixelement und einer Submatrix. Diese Zuweisung kann in einer Lookup-Tabelle hinterlegt sein oder mittels einer Rechenvorschrift erfolgen. Dabei ist es vorteilhaft, wenn jeder Submatrix eine Korrespondenztabelle zugewiesen ist, in der die Positionen der entsprechenden Matrixelemente hinterlegt werden.

Vorteilhaft ist es auch, wenn die Matrix ein erstes Bild ist und die Vergleichsmatrix ein zweites Bild ist. Vorteilhaft ist es ebenfalls, wenn das Matrixelement ein Bildpunkt oder Pixel in dem ersten Bild und das Vergleichsmatrixelement ein Bildpunkt oder Pixel in dem zweiten Bild ist. Die Begriffe "Bildpunkt" und "Pixel" sind derart allgemein aufzufassen, dass darin ein Merkmal (z.B. mit 16 bit) gespeichert sein kann, das die lokale Umgebung um die Position des Pixels beschreibt. Damit lässt sich das Verfahren einfach auf Bilder und eine Bildverarbeitung anwenden. Beispielsweise können zwei Bilder zu einem unterschiedlichen Zeitpunkt miteinander verglichen werden, um die Bewegung eines Bildpunktes von dem ersten Bild zum zweiten Bild nachzuverfolgen. Dies kann beispielsweise dadurch entstehen, dass die Zuordnung als optischer Fluss aufgefasst wird. Daneben ist es auch möglich Stereobilder von zwei Kameras miteinander zu vergleichen, um beispielsweise eine Entfernung eines Punktes in einer 3D-Szene zu bestimmen. Bei der verwendeten Matrix muss es sich allgemein nicht um eine kartesische Matrix handeln. Eine Hexagonalmatrix oder eine Matrix mit anderer Anordnungsform der Matrixelemente ist ebenso von der Erfindung umfasst.

Vorteilhaft ist es, wenn ein Merkmal eines Matrixelements oder Vergleichsmatrixelements die Umgebung um das Matrixelement oder um das Vergleichsmatrixelement beschreibt. Vorteilhaft repräsentieren gleiche Merkmale eine gleiche Umgebung um ein Element, so dass ein Element mit einem gleichen Merkmal in dem ersten Bild und dem zweiten Bild wieder erkannt werden können.

Es ist ebenso vorteilhaft, wenn das Zugriffsmerkmal aus dem Merkmal eines Matrixelements oder Vergleichsmatrixelements gebildet wird. Die Bestimmung des Zugriffsmerkmals kann mittels des gesamten Merkmals, eines Teils des Merkmals oder durch mehrere Merkmale mehrerer Matrixelemente bzw. Vergleichsmatrixelemente erfolgen. Dies kann abhängig davon sein, wie groß beispielsweise der Wertebereich eines Merkmals im Vergleich zur Größe der Korrespondenztabellen bzw. im Vergleich zur Länge der Korrespondenztabellen ist. Im einfachsten Fall ist das Merkmal gleich dem Zugriffsmerkmal. Das Zugriffsmerkmal kann die Adresse eines Tabellenfeldes oder die Zeile einer Korrespondenztabelle als Adresse angeben.

Vorteilhaft ist es ebenso, wenn ein Tabellenfeld einer Korrespondenztabelle weitere Attribute oder Merkmale oder Daten umfasst. Neben der Speicherung der Position eines Matrixelements ist es auch möglich, eine Zuordnung zu einer vorher geschriebenen und nun überschriebenen Position eines Matrixelements zu kodieren, beispielsweise als ein Abstandsmaß zwischen den beiden Positionen. Darüber hinaus können weitere Attribute oder Merkmale vorgesehen sein, beispielsweise um eine Klassifizierung der Matrixelemente vorzunehmen.

Es ist vorteilhaft, wenn eine sequentielle Bearbeitung der Matrix und der Vergleichsmatrix erfolgt. Die sequentielle Verarbeitung der Matrix kann sich vorteilhafter Weise jeweils auf die Submatrix beziehen. Hierdurch ist eine Parallelverarbeitung des Schreibprozesses und/oder Leseprozesses möglich, insbesondere wenn mehrere Recheneinheiten zur Verfügung stehen. So kann die Rechenzeit entsprechend verringert werden. Alternativ kann auch eine Untergruppe von Submatrizen bearbeitet werden und nach deren vollständiger Verarbeitung eine weitere Untergruppe, gegebenenfalls mit einer Überlappung bearbeitet werden. Vorteilhafterweise muss dabei je nach Implementierung weniger Speicher für die Korrespondenztabellen vorgesehen sein, da nur eine geringere Anzahl, nämlich gerade die Anzahl der Gruppenmitglieder von Submatrizen, die bearbeitet werden, vorgesehen sein muss. Alternativ kann auch eine sequentielle Abarbeitung der gesamten Matrix bzw. des gesamten ersten Bildes erfolgen, beispielsweise zeilenweise. Je nach Implementierung kann diese Vorgehensweise zu geringer Latenz führen, so dass die Zeit zwischen dem Eingang der Positionsdaten eines Matrixelements und der Ermittlung der Zuordnung bzw. Korrespondenzen als Ergebnis der Zuordnung besonders kurz ist. Insbesondere bei der Verarbeitung von Bilddaten kann sich dieser Effekt positiv bemerkbar machen, wenn die Bereitstellung von Bilddaten zeilenweise erfolgt, beispielsweise bei Bildsensoren mit Rolling-Shutter.

Es ist vorteilhaft, wenn ein Suchfeld in der Matrix vorgesehen ist. Das Suchfeld umfasst eine Mehrzahl von Matrixelementen, die schon von dem Schreibprozess bearbeitet wurden, beispielsweise in die Tabelle eingetragen wurden. Es kann vorteilhafterweise auch das aktuelle Matrixelement des Schreibprozesses umfassen, also das zuletzt geschriebene Matrixelement. Eine Zuordnung von Matrixelementen und Vergleichselementen erfolgt nur für solche Matrixelemente, die innerhalb des Suchfelds angeordnet sind. Auf diese Weise kann der Suchbereich für Zuordnungen zwischen der Matrix und der Vergleichsmatrix beschränkt werden, beispielsweise um Mehrdeutigkeiten zu vermeiden. Das Suchfeld kann nicht nur eine rechteckige oder quadratische Form, sondern auch andere Formen, wie beispielsweise Kreis, Ellipse, Polygon oder Ähnliches, aufweisen.

Vorteilhaft ist es, wenn in einem weiteren fakultativen Schritt aus den erstellten Zuordnungen eine Ergebnismatrix gebildet wird, die die Korrespondenzen zwischen den Matrixelementen und Vergleichsmatrixelementen aufzeigt. Eine derartige Matrix lässt sich einfach weiterverarbeiten und auswerten.

Es ist ebenso vorteilhaft, wenn die Zuordnung ein Vektor ist. Der Vektor kann bevorzugt aus der aus dem Tabellenfeld ausgelesenen Position und der Position des aktuellen Vergleichsmatrixelements berechnet werden. Eine Berechnung erfolgt beispielsweise durch Differenzbildung.

Ferner ist es vorteilhalft, einen Reset der Korrespondenztabelle durchzuführen und vorhanden Werte zu löschen oder zu überschreiben. Der Reset kann als einmaliger Reset (Initialisierung) erfolgen, beispielsweise für die gesamte Korrespondenztabelle. Bevorzugt erfolgt er vor dem Schreibprozess. Alternativ und ebenfalls bevorzugt kann der Reset als kontinuierlicher Prozess erfolgen, der parallel zum Schreibprozess oder zum Leseprozess ausgeführt werden kann. Beim Vorhandensein eines Suchfeldes werden die Werte innerhalb der Tabelle überschrieben, die bereits so alt sind, dass sie nicht mehr für die Zuordnungsbildung bzw. Korrespondenzbildung verwendet werden, weil sie außerhalb des Suchbereichs liegen, also der Leseprozess die entsprechenden Matrixelemente schon bearbeitet hat. Vorteilhaft ist es auch, zwei geeignet zeitversetzte Reset-Durchläufe pro Bildpaar bzw. pro Matrixpaar durchzuführen, um im kontinuierlichen Reset-Modus eine korrekte und vollständige Bearbeitung zu gewährleisten und sicherzustellen, dass alte Einträge in der Korrespondenztabelle rechtzeitig gelöscht werden, bevor bei der Bearbeitung eines nächsten Matrixpaares eine irrtümliche Korrespondenzbildung oder Zuordnungsbildung erfolgen kann.

Die Vorrichtung zur Ermittlung einer Zuordnung zwischen einem Matrixelement einer Matrix und einem Vergleichsmatrixelement einer Vergleichsmatrix, die dazu eingerichtet ist, das erfindungsgemäße Verfahren auszuführen, ist vorteilhaft und weist alle Vorteile des erfindungsgemäßen Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ablaufskizze des erfindungsgemäßen Verfahrens und
- Figur 2: eine schematische Darstellung zur Herstellung der Korrespondenzen zwischen einer Matrix und einer Vergleichsmatrix mittels mehrerer Korrespondenztabellen.

### Ausführungsformen der Erfindung

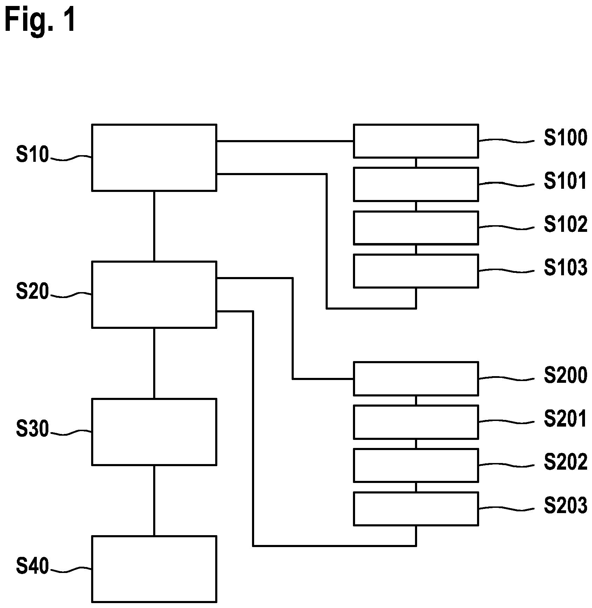

Figur 1 zeigt ein prinzipielles Ablaufschema des erfindungsgemäßen Verfahrens zur Ermittlung einer Zuordnung oder Korrespondenz zwischen einem Matrixelement einer Matrix und einem Vergleichsmatrixelement einer Vergleichsmatrix. Die Matrix ist dabei in einer Mehrzahl von Submatrizen aufgeteilt. Jeder Submatrix ist eine Korrespondenztabelle zugeordnet. In einem Schritt S10 erfolgt das Schreiben einer Position eines Matrixelements einer Submatrix in ein Tabellenfeld in der zugeordneten Korrespondenztabelle mittels eines Schreibprozesses. Der Schreibprozess gliedert sich in die einzelnen Schritte S100 bis S103. In Schritt S100 wird zunächst ein Merkmal aus einem Matrixelement einer der Submatrizen der Matrix ausgelesen. Schritt S101 sieht vor, aus dem ausgelesenen Merkmal des Matrixelements ein Zugriffsmerkmal zu ermitteln. Im Schritt S102 wird aus dem Zugriffsmerkmal ein Tabellenfeld der zugehörigen Korrespondenztabelle ermittelt. Das Schreiben der Position des Matrixelements der Submatrix der Matrix in das ermittelte Tabellenfeld der zugehörigen Korrespondenztabelle erfolgt im Schritt S103.

Im nachfolgenden Schritt S20 wird mittels eines Leseprozesses je eine Position eines Matrixelements aus einem Tabellenfeld aller Korrespondenztabellen ermittelt. Der Leseprozess S20 sieht dabei die Schritte S200 bis S203 vor, wobei im Schritt S200 aus einem Vergleichsmatrixelement der Vergleichsmatrix ein Merkmal ausgelesen wird. Im Schritt S201 wird ein Zugriffsmerkmal aus dem Merkmal des Vergleichsmatrixelements ermittelt und aus diesem in einem Schritt S202 ein Tabellenfeld der Korrespondenztabellen ermittelt. In dem Schritt S203 erfolgt das Auslesen der hinterlegten Position des Matrixelements aus dem ermittelten Tabellenfeld der Korrespondenztabellen. Dieser Schritt wird auf eine, mehrere oder alle Korrespondenztabellen angewandt.

Ein abschließender Schritt S 30 ermittelt dann je eine Zuordnung pro Korrespondenztabelle zwischen der aus dem Tabellenfeld ausgelesenen Position des Matrixelements aus der entsprechenden Korrespondenztabelle und der aktuellen Position des Vergleichsmatrixelements der Vergleichsmatrix. In einem fakultativen Schritt S 40 können die ermittelten Zuordnungen oder Korrespondenzen zwischen den Matrixelementen und den Vergleichsmatrixelementen in einer Ergebnismatrix abgelegt werden. Die Zuordnungen können beispielsweise als Zuordnungsvektoren, zum Beispiel im Falle einer Bildverarbeitung als Korrespondenzvektoren oder Bewegungsvektoren oder optical-flow-Vektoren abgelegt sein. Gibt es mehrere Zuordnungen zwischen einem Vergleichsmatrixelement und mehreren Matrixelementen, so kann eine Bewertung oder Auswertung der Zuordnung und gegebenenfalls eine Hierarchisierung erfolgen.

Bei der Ausführung des Verfahrens gemäß Figur 1 besteht vorteilhafterweise ein zeitlicher oder räumlicher Versatz zwischen dem Schreibprozess S10 und dem Leseprozess S20. Der Schreibprozess S10 mit seinen Schritten S100 bis S103 wird für mehrere Matrixelemente durchlaufen, bevor der Leseprozess S20 mit seinen Prozessschritten S200 bis S203 startet. Der Versatz zwischen dem Schreibprozess S10 und dem Leseprozess S20 kann fest oder variabel sein. Er ist abhängig von der Größe der Matrix und Vergleichsmatrix oder im Falle einer Bildverarbeitung von den zu verarbeitenden Bildern oder von anwendungsspezifischen Vorgaben. Insbesondere ist der Versatz abhängig von einem erforderlichen Suchbereich, eventuell nur von der vertikalen Komponente des Suchbereichs in einer Richtung.

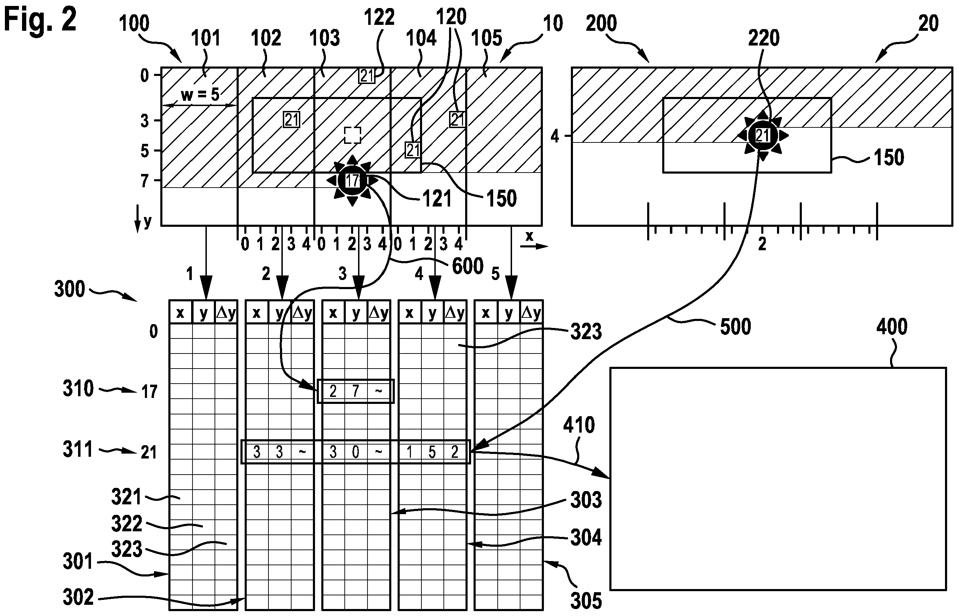

Figur 2 zeigt die Korrespondenzbildung anhand von einer Momentaufnahme mit einem ersten Bild 10 und einem zweiten Bild 20, die beispielsweise Full-HD-Bilder sein können. Das erste Bild 10 wird durch eine Matrix 100 repräsentiert, das zweite Bild 20 durch eine Vergleichsmatrix 200.

Die Matrix 100 ist in mehrere Submatrizen 101, 102, 103, 104 und 105 aufgeteilt, die im vorliegenden Beispiel rechteckig und gleichgroß sind. Andere Matrixformen und somit eine andere Aufteilung der Matrix 100 sind denkbar. Beispielsweise kann eine Aufteilung in Blockzeilen statt Blockspalten erfolgen, insbesondere wenn der Prozessablauf spaltenweise statt zeilenweise erfolgt. Es können ungleich breite Submatrizen oder ungleich hohe Submatrizen gebildet werden. Auch schräg verlaufende Matrizen bzw. die Regionen in Bildern sowie unregelmäßig geformte Regionen und entsprechende Matrizen sind denkbar. Die Matrizen können miteinander überlappen. Beispielsweise können Matrizen nicht nur in kartesischer Form sein; sondern auch Hexagonalmatrizen oder ähnliche sind denkbar.

Im Falle eines Full-HD-Bildes umfasst die Matrix 100 insgesamt 1920 x 1080 Matrixelemente 120, was entsprechend vielen Bildpunkten bzw. Pixel in dem ersten Bild 10 oder dem zweiten Bild 20 entspricht. Eine vorteilhafte Aufteilung des ersten Bildes 10 in gleichbreite Regionen ist bei Full-HD-Bildern die Bildung von 30 Blockspalten mit einer Breite von je 64 Pixeln. Dies entspricht 30 Submatrizen 101, ... 105, mit einer Breite von jeweils 64 Matrixelementen 120.

Das zweite Bild 20 kann ebenfalls in Regionen aufgeteilt werden, was einer Aufteilung der Vergleichsmatrix 200 in mehrere Submatrizen entspricht. Eine derartige Aufteilung ist jedoch nicht notwendig und im beschriebenen Ausführungsbeispiel nicht vorgesehen.

Die Unterteilung der Matrix 100 in Submatrizen 101, ... 105 hat den Vorteil, dass der Schreibprozess zum Schreiben vom Merkmalen der einzelnen Matrixelemente 120 in Korrespondenztabellen parallelisiert erfolgen kann. Ein weiterer Vorteil besteht darin, dass das Überschreiben von Tabelleneinträgen in der Korrespondenztabelle umso seltener erfolgt, je weniger Matrixelemente die zugehörige Submatrix umfasst. Jeder Submatrix 101, ... 105 ist eine Korrespondenztabelle 301, ... 305 zugeordnet. Die einzelnen Matrixelemente werden über eine hier nicht gezeigte Lookup-Tabelle den entsprechenden Submatrizen 101, ... 105 zugeordnet. Eine Zuweisung über einen Algorithmus oder Funktion ist ebenfalls denkbar.

Durch die Aufteilung der Matrix 100 in Submatrizen kann nicht nur eine Parallelverarbeitung, insbesondere beim Vorhandensein mehrerer Recheneinheiten, erfolgen. Der Speicherbedarf je Korrespondenztabelle oder je Tabellenfeld einer Korrespondenztabelle reduziert sich ebenfalls. Wird bei einem Full-HD-Bild für jedes Bild eine Koordinate abgespeichert, so liegt der Speicherbedarf bei 21 Bit, wenn die x- und y-Koordinate gemeinsam gespeichert werden, und bei 22 Bit, wenn die x- und y-Koordinate separat gespeichert werden. Bei einer Aufteilung der Matrix 100 in Submatrizen 101, ... 105 mit einer Breite von insgesamt 64 Matrixelementen 120, kann der Speicherbedarf auf 17 Bit reduziert werden. Varianten mit weniger Bit pro Tabelle sind ebenfalls denkbar, wenn die Anzahl der verwendeten Merkmale pro Bild 10, 20 bzw. pro Matrix 100 oder Vergleichsmatrix 200 kleiner ist als die Anzahl der Pixel bzw. Matrixelemente.

Figur 2 zeigt nun ein erstes Bild 10, das durch die Matrix 100 repräsentiert wird, wobei das Bild 10 bzw. die Matrix 100 in fünf Submatrizen 101, ... 105 unterteilt ist. Diese Darstellung ist vereinfacht und soll nur das Prinzip des erfindungsgemäßen Verfahrens darstellen. Die verwendeten Submatrizen haben jeweils eine Breite von w = 5 Matrixelementen 120. Der Einfachheit halber sind den Matrixelementen 120 nicht Merkmale sondern jeweils Zugriffsmerkmale zugeordnet, die hier als Zahl dargestellt werden und die Adresse der Korrespondenztabellen 300 repräsentieren.

In der Matrix 100 sind mehrere Matrixelemente 120 exemplarisch gezeigt, die die Zugriffsmerkmale m = 17 bzw. m = 21 aufweisen. Diese Zugriffsmerkmale verweisen jeweils auf die Tabellenfelder mit der entsprechenden Adresse 310 bzw. mit der Adresse 311. Diese Adressen 310, 311 entsprechen einer Zeile in einer der Korrespondenztabellen 300.

In den Tabellenfeldern kann jeweils mindestens eine x-Koordinate und eine y-Koordinate abgespeichert werden. Diese sind in den Spalten 321 bzw. 322 abgelegt. Optional ist in dem hier gezeigten Beispiel eine weitere Spalte 323 vorgesehen, so dass in den einzelnen Tabellenfeldern auch ein Abstand Δy zu einem vorher geschriebenen Matrixelement 120 vermerkt werden kann, wenn eine Position in einem Tabellenfeld bereits überschrieben wurde.

Der schreibende Prozess ist in dem ersten Bild 10 dargestellt. Im hier gezeigten Beispiel erfolgt der Schreibprozess sequentiell zeilenweise über alle Submatrizen 101, ... 105. Die bereits bearbeiteten Matrixelemente 120 sind schraffiert hinterlegt. Der Schreibprozess befindet sich in der gezeigten Momentaufnahme von Figur 2 aktuell bei dem Matrixelement 121 mit dem Zugriffsmerkmal 17 an der Koordinate x_{w} = 2, y_{w} = 7 der dritten Submatrix 103, dass heißt in der Submatrix 103 mit dem Zähler k = 3. x_{w} ist hier als relative Koordinate zu verstehen, die sich auf die jeweilige Submatrix 101, ... 105 bezieht. Um die relative Koordinate x_{w} in eine absolute Koordinate der Matrix 100 umzuwandeln, müsste (k-1) w hinzuaddiert werden.

Der schreibende Prozess trägt die Koordinate (2,7) des aktuellen Matrixelements 121 an der Adresse 310 (mit dem Zugriffsmerkmal 17) in die Korrespondenztabelle 303 ein. Dieser Schreibprozess ist durch den Pfeil 600 gekennzeichnet.

Da noch kein Matrixelement mit einem Zugriffsmerkmalwert m = 17 in dieser Korrespondenztabelle 303 geschrieben wurde, existiert im entsprechenden Tabellenfeld an der Adresse 310 (hier 17. Zeile) noch kein gültiger Eintrag. Daher ist auch in der entsprechenden Spalte 323 für den Abstand Δy kein Wert eingetragen. Stattdessen wird das Zeichen ∼ (Tildezeichen) verwendet. Optional kann der schreibende Prozess noch weitere Zusatzinformationen oder Attribute in das Tabellenfeld eintragen, beispielsweise weitere Positionen oder ergänzende Merkmale, was hier nicht dargestellt ist.

Der Schreibprozess hat während der sequentiellen Abarbeitung mehrere Matrixelemente 120 aus der Matrix 100 ausgelesen und in die zugehörigen Korrespondenzmatrizen 302, 303, 304 entsprechend den Submatrizen 102, 103 und 104 eingetragen, da die mit dem Zugriffsmerkmalwert m = 21 gekennzeichneten Matrixelemente 120 in den entsprechenden Submatrizen 102, 103, 104 aufgedeckt wurden.

Im Adressfeld 311, das die Adresse 21 entsprechend dem Zugriffsmerkmalwert m = 21 hat, sind folglich in den Korrespondenztabellen 302, 303 und 304 jeweils die Positionen der einzelnen Matrixelemente 120 eingetragen. In der Korrespondenztabelle 304 wurde in der entsprechenden Zeile (Adresse 21) beim Abstand Δy der Wert 2 eingetragen, da in der entsprechenden Submatrix 104 zwei Matrixelemente 120 mit dem Zugriffsmerkmalwert 21 vorhanden sind. Der Abstand Δy = 2 ergibt sich aus den entsprechenden y-Koordinaten der beiden Matrixelemente 120. Der Abstand Δy kann beispielsweise als lokales Maß für die Eindeutigkeit des Zugriffsmerkmals genutzt werden. Je größer Δy ist, um so eindeutiger ist das Zugriffsmerkmal innerhalb des bereits bearbeiteten Teils der betreffenden Submatrix 101, ... 105.

Im hier gezeigten Beispiel eilt der lesende Prozess mit einem Versatz von hier dargestellt zwei Zeilen und null Spalten dem schreibenden Prozess hinterher. Bezogen auf das Koordinatensystem der Matrix 100 bzw. des ersten Bildes 10 befindet sich der lesende Prozess an einer Position in der dritten Submatrix 103 an der Stelle x_{R} = 2, y_{R} = 4. Diese Position wird als Referenzposition bezeichnet. Das Vergleichsmatrixelement hat das Zugriffsmerkmal mit dem Wert m_{R} = 21, was der Tabellenadresse 311 mit dem Wert 21, also der entsprechenden Zeile der Korrespondenztabellen 300 entspricht. Der Leseprozess liest nun alle oder einen vorbestimmten (z.B. per Lookup-Table festgelegten) Teil der Tabellenfelder mit der Adresse 311 (Zeile mit Adresse 21) aus, die einen Wert enthalten.

Das aus dem Vergleichsmatrixelement 220 an der aktuellen Position (Referenzposition) ermittelte Zugriffsmerkmal mit dem Wert m_{w} = 21 führt also zu einem Auslesen der entsprechenden Tabellenfelder an der Adresse 311 der Korrespondenztabellen. Dieses Auslesen ist in Figur 2 durch den Pfeil 500 dargestellt, der die Zuweisung zwischen dem Vergleichsmatrixelement 220 und den Tabellenfeldern an der Adresse 311 darstellt.

Das Auslesen erfolgt hier aus der Korrespondenztabelle 303 sowie aus den (hier beiden) benachbarten Korrespondenztabellen 302 und 304. Damit ist es möglich, auch Korrespondenzen und Zuordnungen über die eigene Submatrix 103 hinweg zu finden, was insbesondere bei Bildern und sich quer zur Kamera bewegenden Objekten vorteilhaft ist. Beim Auslesen werden also drei relevante Korrespondenztabellen 302, 303, 304 ausgelesen und drei mögliche Matrixelemente 120 als Korrespondenzkandidaten bzw. Zuordnungskandidaten gebildet. Für jeden der Kandidaten kann ein Zuordnungsvektor (u, v) gebildet werden, z.B. durch Korrespondenzbildung von Positions-Koordinaten, die sich auf ein jeweiliges Koordinatensystem der Matrix 100 bzw. Vergleichsmatrix 200 beziehen.

Vorteilhafterweise werden die Korrespondenztabellen 301, 302, 303, 304, 305 ausgelesen, deren Submatrizen 101, ... 105 innerhalb des Suchfeldes 150 angeordnet sind. Auf diese Weise lässt sich die Suche auf die relevanten Korrespondenztabellen beschränken.

Optional wird nun für jeden der Zuordnungsvektoren (u, v) überprüft, ob sich die aufgefundenen Matrixelemente 120 innerhalb eines festgelegten Suchfeldes 150 befinden. Das Suchfeld 150 bezieht sich hierbei auf das erste Bild 10; es ist aus Übersichtlichkeitsgründen jedoch auch im zweiten Bild 20 eingezeichnet. Wie aus der Figur 2 zu entnehmen ist, ist das Suchfeld 150 (nicht notwendigerweise) unsymmetrisch zum aktuellen Vergleichsmatrixelement 220. Es ist auch denkbar, dass sich das aktuelle Vergleichsmatrixelement 220 mit seiner Referenzposition außerhalb des Suchfeldes 150 befindet.

Wichtig in Bezug auf das Suchfeld 150 ist es, dass der schreibende Prozess soweit vorangeschritten ist, dass alle gewünschten Matrixelemente 120, die sich im Suchfeld 150 befinden, bereits erfasst und Ihre Position in den entsprechenden Korrespondenztabellen 300 eingetragen ist. In der Praxis können "alle gewünschten" diejenigen sein, die für eine Korrespondenzbildung zur Verfügung stehen sollen, z.B. weil sie von Interesse sind.

In dem hier gezeigten Beispiel zeigt sich, dass das aus der Korrespondenztabelle 303 ermittelte Matrixelement 122 außerhalb des Suchfeldes 150 liegt. Es wird daher verworfen.

In Korrespondenztabelle 304 ist im Tabellenfeld 311 zu erkennen, dass in der Spalte 323 ein Abstand von Δy = 2 eingetragen ist. Dies weist darauf hin, dass ein weiteres Matrixelement 120 mit dem Zugriffsmerkmal m = 21 in der Submatrix 104 enthalten ist und dass jedoch dieser Wert bereits überschrieben wurde und lediglich die Position des zuletzt gelesenen Matrixelements 120 im Tabellenfeld 311 vermerkt wurde.

Selbstverständlich ist es möglich, in den Korrespondenztabellen 300 in den entsprechenden Tabellenfeldern weitere Daten aufzunehmen, beispielsweise Attribute oder Merkmale, die eine Klassifizierung des entsprechenden Matrixelementes 120 bzw. des Bildpunktes sein können.

Aus den ermittelten Zuordnungskandidaten der Matrixelemente 120, 122 werden nun in einem weiteren Schritt Zuordnungen ermittelt oder berechnet. Die Ermittlung der Zuordnung erfolgt aus der Position des aus dem Tabellenfeld ausgelesenen Matrixelements 120 und der aktuellen Position des Vergleichsmatrixelements 220. Die ermittelten Zuordnungen können in einem weiteren fakultativen Schritt in einer Ergebnismatrix 400 abgespeichert werden. Im Falle einer Bildverarbeitung können die Zuordnungsvektoren, die beispielsweise durch Differenzbildung der Position des Vergleichsmatrixelements 220 und des ausgelesenen Matrixelements 120 gebildet werden, in Form von optischen Flussvektoren in einer Matrix hinterlegt sein. Dieser Schritt wird durch den Pfeil 410 in Figur 2 dargestellt.

## Patentansprüche

1. Verfahren zur Ermittlung einer Zuordnung zwischen einem Matrixelement (120) einer Matrix (100) und einem Vergleichsmatrixelement (220) einer Vergleichsmatrix (200), wobei die Matrix (100) ein erstes Bild (10) ist und die Vergleichsmatrix (200) ein zweites Bild (20) ist, wobei die Matrix (100) in eine Mehrzahl von Submatrizen (101, ... 105) aufgeteilt ist und jeder Submatrix (101, ... 105) eine Korrespondenztabelle (300, 301, ... 305) zugeordnet ist, umfassend die folgenden Schritte:
Schreiben (S10) einer Position eines Matrixelements (120) einer Submatrix (101, ... 105) in ein Tabellenfeld der zugeordneten Korrespondenztabelle (300, 301, ... 305) mittels eines Schreibprozesses, wobei ein Matrixelement (120) ein Bildpunkt in dem ersten Bild (10) ist, Ermitteln (S20) je einer Position eines Matrixelements (120) aus einem Tabellenfeld wenigstens einer der Korrespondenztabellen (300, 301, ... 305) mittels eines Leseprozesses, wobei ein Versatz zwischen dem Schreibprozess und dem Leseprozess besteht und der Versatz fest oder variabel ist, wobei der Versatz so gewählt ist, dass der Leseprozess dem Schreibprozess folgt, und
Ermitteln (S30) je einer Zuordnung pro Korrespondenztabelle (300, 301, ... 305) zwischen der aus dem Tabellenfeld ausgelesenen Position eines Matrixelements (120) der Matrix (100) und der aktuellen Position des Vergleichsmatrixelements (220) der Vergleichsmatrix (200), wobei der Schreibprozess die folgenden Schritte umfasst:
- Ermitteln (S100) eines Merkmals eines Matrixelements (120) einer der Submatrizen (101, ... 105) der Matrix (100), wobei das Merkmal die Umgebung um das Matrixelement (120) beschreibt,
- Ermitteln (S101) eines Zugriffsmerkmals aus dem Merkmal des Matrixelements (120),
- Ermitteln (S102) eines Tabellenfeldes der zugehörigen Korrespondenztabelle (300, 301, ... 305) aus dem Zugriffsmerkmal,
- Schreiben (S103) der Position des Matrixelements (120) der Submatrix (101, ... 105) der Matrix (100) in das ermittelte Tabellenfeld der zugehörigen Korrespondenztabelle,
und der Leseprozess die folgenden Schritte umfasst:
- Auslesen (S200) eines Merkmals eines Vergleichsmatrixelements (220) der Vergleichsmatrix (200), wobei ein Vergleichsmatrixelement (220) ein Bildpunkt in dem zweiten Bild (20) ist und das Merkmal des Vergleichsmatrixelements (220) die Umgebung um das Vergleichsmatrixelement (220) beschreibt,
- Ermitteln (S201) des Zugriffsmerkmals aus dem Merkmal des Vergleichsmatrixelements (220),
- Ermitteln (S202) eines Tabellenfeldes der Korrespondenztabellen (300, 301, ... 305) mittels des Zugriffsmerkmals des Vergleichsmatrixelements (220),
- Auslesen (S203) der hinterlegten Position des Matrixelements (120) aus dem ermittelten Tabellenfeld der Korrespondenztabellen (300, 301, ... 305).

2. Verfahren gemäß einem der vorhergehenden Ansprüche, **dadurch gekennzeichnet, dass** der Leseprozess auf eine vorbestimmte Gruppe von Korrespondenztabellen oder auf alle Korrespondenztabellen angewendet wird.

3. Verfahren gemäß dem vorhergehenden Anspruch, **dadurch gekennzeichnet, dass** eine Zuweisung zwischen Matrixelement (120) und Submatrix (101, ... 105) besteht.

4. Verfahren gemäß einem der vorhergehenden Ansprüche, **dadurch gekennzeichnet, dass** ein Zugriffsmerkmal aus dem Merkmal eines Matrixelements (120) oder eines Vergleichsmatrixelements (220) gebildet wird, wobei zur Bestimmung des Zugriffsmerkmals das gesamte Merkmal, ein Teil des Merkmals oder Merkmale mehrerer Matrixelemente (120) bzw. Vergleichsmatrixelemente (220) verwendet werden, abhängig davon, wie groß der Wertebereich des Merkmals im Vergleich zur Größe der Korrespondenztabelle (300, 301, ... 305) ist.

5. Verfahren gemäß einem der vorhergehenden Ansprüche, **dadurch gekennzeichnet, dass** ein Tabellenfeld der Korrespondenztabelle (300, 301, ... 305) weitere Attribute umfasst.

6. Verfahren gemäß einem der vorhergehenden Ansprüche, **dadurch gekennzeichnet, dass** eine sequentielle Bearbeitung der Matrix (100) und der Vergleichsmatrix (200) erfolgt.

7. Verfahren gemäß einem der vorhergehenden Ansprüche, **dadurch gekennzeichnet, dass** ein Suchfeld (150) in der Matrix (100) vorgesehen ist, das eine Mehrzahl schon bearbeiteter Matrixelemente (120) umfasst, und bevorzugt eine Zuordnung von Matrixelementen (120) und Vergleichsmatrixelementen (220) nur für Matrixelemente (120) innerhalb des Suchfelds (150) erfolgt.

8. Verfahren gemäß einem der vorhergehenden Ansprüche, **gekennzeichnet durch** den weiteren Schritt:
- Bilden einer Ergebnismatrix aus den erstellten Zuordnungen zwischen den Matrixelementen (120) und den Vergleichsmatrixelementen (220).

9. Verfahren gemäß einem der vorhergehenden Ansprüche, **dadurch gekennzeichnet, dass** die Zuordnung ein Vektor ist, der bevorzugt aus der aus dem Tabellenfeld ausgelesenen Position und der Position des aktuellen Vergleichsmatrixelements (220) berechnet wird, bevorzugt aus der Differenz.

10. Verfahren gemäß einem der vorhergehenden Ansprüche, **dadurch gekennzeichnet, dass** ein Reset der Korrespondenztabelle (300, 301, ... 305) durchgeführt wird, wobei ein einmaliger Reset der gesamten Korrespondenztabelle (300, 301, ... 305), bevorzugt vor dem Schreibprozess, oder ein kontinuierlicher Reset der Korrespondenztabelle (300, 301, ... 305), bevorzugt parallel zum Schreibprozess oder zum Leseprozess, erfolgt.

11. Vorrichtung zur Ermittlung einer Zuordnung zwischen einem Matrixelement (120) einer ersten Matrix (100) und einem Vergleichsmatrixelement (220) einer Vergleichsmatrix, die dazu eingerichtet ist, das Verfahren gemäß einem der vorhergehenden Ansprüche auszuführen.

## Claims

1. Method for determining an association between a matrix element (120) of a matrix (100) and a comparison matrix element (220) of a comparison matrix (200), wherein the matrix (100) is a first image (10) and the comparison matrix (200) is a second image (20), wherein the matrix (100) is divided into a plurality of sub-matrices (101, ... 105) and a correspondence table (300, 301, ... 305) is associated with each sub-matrix (101, ... 105), comprising the following steps of:
writing (S10) a position of a matrix element (120) of a sub-matrix (101, ... 105) to a table field of the associated correspondence table (300, 301, ... 305) by means of a writing process, wherein a matrix element (120) is a pixel in the first image (10),
determining (S20) one position each of a matrix element (120) from a table field of at least one of the correspondence tables (300, 301, ... 305) by means of a reading process, wherein there is an offset between the writing process and the reading process and the offset is fixed or variable, wherein the offset is selected in such a manner that the reading process follows the writing process, and
determining (S30) an association for each correspondence table (300, 301, ... 305) between that position of a matrix element (120) of the matrix (100) which has been read from the table field and the current position of the comparison matrix element (220) of the comparison matrix (200),
wherein the writing process comprises the following steps of:
- determining (S100) a feature of a matrix element (120) of one of the sub-matrices (101, ... 105) of the matrix (100), wherein the feature describes the environment around the matrix element (120),
- determining (S101) an access feature from the feature of the matrix element (120),
- determining (S102) a table field of the associated correspondence table (300, 301, ... 305) from the access feature,
- writing (S103) the position of the matrix element (120) of the sub-matrix (101, ... 105) of the matrix (100) to the determined table field of the associated correspondence table,
and the reading process comprises the following steps of:
- reading (S200) a feature of a comparison matrix element (220) of the comparison matrix (200), wherein a comparison matrix element (220) is a pixel in the second image (20), and the feature of the comparison matrix element (220) describes the environment around the comparison matrix element (220),
- determining (S201) the access feature from the feature of the comparison matrix element (220),
- determining (S202) a table field of the correspondence tables (300, 301, ... 305) by means of the access feature of the comparison matrix element (220),
- reading (S203) the stored position of the matrix element (120) from the determined table field of the correspondence tables (300, 301, ... 305).

2. Method according to one of the preceding claims, **characterized in that** the reading process is applied to a predetermined group of correspondence tables or to all correspondence tables.

3. Method according to the preceding claim, **characterized in that** there is an assignment between the matrix element (120) and the sub-matrix (101, ... 105).

4. Method according to one of the preceding claims, **characterized in that** an access feature is formed from the feature of a matrix element (120) or a comparison matrix element (220), wherein the entire feature, a part of the feature or features of a plurality of matrix elements (120) or comparison matrix elements (220) is/are used to determine the access feature depending on the size of the range of values of the feature in comparison with the size of the correspondence table (300, 301, ... 305).

5. Method according to one of the preceding claims, **characterized in that** a table field of the correspondence table (300, 301, ... 305) comprises further attributes.

6. Method according to one of the preceding claims, **characterized in that** the matrix (100) and the comparison matrix (200) are sequentially processed.

7. Method according to one of the preceding claims, **characterized in that** a search field (150) is provided in the matrix (100) and comprises a plurality of matrix elements (120) which have already been processed, and matrix elements (120) and comparison matrix elements (220) are preferably associated only for matrix elements (120) within the search field (150).

8. Method according to one of the preceding claims, **characterized by** the further step of:
- forming a results matrix from the created associations between the matrix elements (120) and the comparison matrix elements (220).

9. Method according to one of the preceding claims, **characterized in that** the association is a vector which is preferably calculated from the position read from the table field and the position of the current comparison matrix element (220), preferably from the difference.

10. Method according to one of the preceding claims, **characterized in that** the correspondence table (300, 301, ... 305) is reset, wherein a one-off reset of the entire correspondence table (300, 301, ... 305), preferably before the writing process, or a continuous reset of the correspondence table (300, 301, ... 305), preferably in parallel with the writing process or the reading process, is carried out.

11. Apparatus for determining an association between a matrix element (120) of a first matrix (100) and a comparison matrix element (220) of a comparison matrix, which apparatus is set up to carry out the method according to one of the preceding claims.

## Revendications

1. Procédé de détermination d'une association entre un élément de matrice (120) d'une matrice (100) et un élément de matrice comparative (220) d'une matrice comparative (200), la matrice (100) étant une première image (10) et la matrice comparative (200) une deuxième image (20), la matrice (100) étant divisée en une pluralité de sous-matrices (101, ..., 105) et chaque sous-matrice (101, ..., 105) étant associée à un tableau de correspondance (200, 301, ..., 305), comprenant les étapes suivantes :
écriture (S10) d'une position d'un élément de matrice (120) d'une sous-matrice (101, ..., 105) dans une cellule de tableau du tableau de correspondance (300, 301, ..., 305) associé au moyen d'un processus d'écriture, un élément de matrice (120) étant un pixel dans la première image (10),
détermination (S20) respectivement d'une position d'un élément de matrice (120) à partir d'une cellule de tableau d'au moins l'un des tableaux du tableau de correspondance (300, 301, ..., 305) au moyen d'un processus de lecture, un décalage étant présent entre le processus d'écriture et le processus de lecture et le décalage étant fixe ou variable, le décalage étant choisi de telle sorte que le processus de lecture suit le processus d'écriture, et
détermination (S30) respectivement d'une association par tableau de correspondance (300, 301, ..., 305) entre la position d'un élément de matrice (120) de la matrice (100), lue depuis la cellule de tableau, et la position actuelle de l'élément de matrice comparative (220) de la matrice comparative (200),
le processus d'écriture comprenant les étapes suivantes :
- détermination (S100) d'une caractéristique d'un élément de matrice (120) de l'une des sous-matrices (101, ..., 105) de la matrice (100), la caractéristique décrivant l'environnement autour de l'élément de matrice (120),
- détermination (S101) d'une caractéristique d'accès à partir de la caractéristique de l'élément de matrice (120),
- détermination (S102) d'une cellule de tableau du tableau de correspondance (300, 301, ..., 305) correspondant à partir de la caractéristique d'accès,
- écriture (S103) de la position de l'élément de matrice (120) de la sous-matrice (101, ..., 105) de la matrice (100) dans la cellule de tableau déterminée du tableau de correspondance correspondant,
et le processus de lecture comprenant les étapes suivantes :
- lecture (S200) d'une caractéristique d'un élément de matrice comparative (220) de la matrice comparative (200), un élément de matrice comparative (220) étant un pixel dans la deuxième image (20) et la caractéristique de l'élément de matrice comparative (220) décrivant l'environnement autour de l'élément de matrice comparative (220),
- détermination (S201) de la caractéristique d'accès à partir de la caractéristique de l'élément de matrice comparative (220),
- détermination (S202) d'une cellule de tableau du tableau de correspondance (300, 301, ..., 305) au moyen de la caractéristique d'accès de l'élément de matrice comparative (220),
- lecture (S203) de la position stockée de l'élément de matrice (120) dans la cellule de tableau déterminée du tableau de correspondance (300, 301, ..., 305).

2. Procédé selon l'une des revendications précédentes, **caractérisé en ce que** le processus de lecture est appliqué sur un groupe prédéterminé de tableaux de correspondance ou sur tous les tableaux de correspondance.

3. Procédé selon l'une des revendications précédentes, **caractérisé en ce qu'**il existe une attribution entre l'élément de matrice (120) et la sous-matrice (101, ..., 105).

4. Procédé selon l'une des revendications précédentes, **caractérisé en ce qu'**une caractéristique d'accès est formée à partir de la caractéristique d'un élément de matrice (120) ou d'un élément de matrice comparative (220), la caractéristique complète, une partie de la caractéristique ou les caractéristiques de plusieurs éléments de matrice (120) ou éléments de matrice comparative (220) étant utilisées pour la détermination de la caractéristique d'accès, en fonction du rapport entre la taille de la plage de valeurs de la caractéristique et la taille du tableau de correspondance (300, 301, ..., 305).

5. Procédé selon l'une des revendications précédentes, **caractérisé en ce qu'**une cellule de tableau du tableau de correspondance (300, 301, ..., 305) comprend des attributs supplémentaires.

6. Procédé selon l'une des revendications précédentes, **caractérisé en ce qu'**un traitement séquentiel de la matrice (100) et de la matrice comparative (200) est effectué.

7. Procédé selon l'une des revendications précédentes, **caractérisé en ce qu'**un champ de recherche (150) se trouve dans la matrice (100), lequel comprend une pluralité d'éléments de matrice (120) déjà traités, et une association entre les éléments de matrice (120) et les éléments de matrice comparative (220) est de préférence effectuée seulement pour les éléments de matrice (120) à l'intérieur du champ de recherche (150).

8. Procédé selon l'une des revendications précédentes, **caractérisé par** l'étape supplémentaire :
- formation d'une matrice de résultat à partir des associations créées entre les éléments de matrice (120) et les éléments de matrice comparative (220).

9. Procédé selon l'une des revendications précédentes, **caractérisé en ce que** l'association d'un vecteur, lequel est de préférence calculé à partir de la position relevée dans la cellule de tableau et de la position de l'élément de matrice comparative (220) actuel, est de préférence réalisée à partir de la différence.

10. Procédé selon l'une des revendications précédentes, **caractérisé en ce qu'**une réinitialisation du tableau de correspondance (300, 301, ..., 305) est effectuée, une réinitialisation unique du tableau de correspondance (300, 301, ..., 305) complet étant effectuée de préférence avant le processus d'écriture, ou une réinitialisation continue du tableau de correspondance (300, 301, ..., 305) de préférence parallèlement au processus d'écriture ou au processus de lecture.

11. Dispositif de détermination d'une association entre un élément de matrice (120) d'une matrice (100) et un élément de matrice comparative (220) d'une matrice comparative, lequel est conçu pour mettre en oeuvre le procédé selon l'une des revendications précédentes.
